# EUROPEAN PATENT SPECIFICATION

(11) **EP 4 194 190 B1**
(45) Date of publication and mention of the grant of the patent: **18.06.2025**
(21) Application number: 21853137.4
(22) Date of filing: 09.07.2021
(51) Int. Cl.: B29D 30/16, B29D 30/60, B29D 30/10

(54) **TIRE PRODUCTION DEVICE AND TIRE PRODUCTION METHOD**
REIFENHERSTELLUNGSVORRICHTUNG UND REIFENHERSTELLUNGSVERFAHREN
DISPOSITIF DE PRODUCTION DE PNEUMATIQUE ET PROCÉDÉ DE PRODUCTION DE PNEUMATIQUE

(30) Priority: 07.08.2020 JP 2020134724
(43) Date of publication of application: 14.06.2023
(73) Proprietor: BRIDGESTONE CORPORATION, Chuo-ku Tokyo 104-8340 (JP)
(72) Inventor: IYANAGI Satoshi, Tokyo 104-8340 (JP); NAKAMURA Toshiki, Tokyo 104-8340 (JP)
(74) Representative: Marks & Clerk LLP
(86) International application number: PCT/JP2021/025996
(87) International publication number: WO 2022/030183

(56) References cited:
- EP-A1- 1 785 263
- JP-A- 2003 513 835
- JP-A- 2005 246 845
- JP-A- 2012 166 516
- JP-A- 2012 166 516
- JP-A- 2014 069 560
- JP-A- 2019 142 040
- US-A1- 2006 021 693

## Description

### TECHNICAL FIELD

The present invention relates to a tire production device and a tire production method, and more particularly, to a tire production device and a tire production method for producing tires with the use of a mold (core) having, as an outer shape thereof, an inner peripheral shape of a tire.

### BACKGROUND ART

Conventionally, as one of the tire production methods, there has been known a metal core production method (core production method). In the metal core production method, different types of rubber materials to be turned into an inner liner, a carcass, a belt ply, sidewalls and a tread of a product tire, are formed into ribbon strips, wrapped around an outer periphery of a core formed to have, as an outer shape thereof, an inner peripheral shape of the product tire, and sequentially stacked, to thereby form a green tire. The green tire is then transported together with the core to a vulcanization molding device, sandwiched by a vulcanizing die that serves as an outer mold and the core as an inner mold and vulcanized, so as to produce the product tire.

Winding of the ribbon strips to the core is performed, for example, as shown in Patent Document 1, by moving a device, which supplies ribbon strips to the outer periphery of the rotating core, in the radial direction or the width direction of the core, or, as shown in Patent Document 2, by turning the core taking the center of the core as the turning center or moving the core with respect to the device that supplies the ribbon strips.

Patent Document 3 discloses an apparatus forming a belt ply by sticking a piece of a tape with a cord on the outer peripheral surface of a drum while inclining it at an angle α with respect to the equatorial plane of the drum. The apparatus has a sticking conveyer which supplies the piece of tape from a supply position P onto the drum to be stuck, and a drum supporting apparatus. The drum supporting apparatus has a rotary table which is rotatably supported around a vertical axial core erected on a base table, and an axial direction moving table, which is movably supported in the drum axial direction on the rotary table, and also rotatably supports the drum around the drum axial core.

### CITATION DOCUMENTS

### Patent Document

Patent Document 1: Japanese Unexamined Patent Application Publication No. 2005-153536
Patent Document 2: Japanese Unexamined Patent Application Publication No. 2014-069559
Patent Document 3: Japanese Patent Application Publication No. 2012-166516

### SUMMARY OF THE INVENTION

### Technical Problem

However, as shown in Patent Document 1, if the device for supplying the ribbon strips is configured by an extrusion molding machine and moved against the core, because the weight of the device is heavy, this may possibly become a factor which causes occurrence of energy loss, risk of failure, or troubles such as feed deficiency. In addition, as shown in Patent Document 2, if the device is configured such that: a unit that supplies the ribbon strips to the core is fixed; the core is made turnable around the center line, serving as the turning center, vertically penetrating the intersection of the center of the core in the width direction and the rotation center axis; and the core is moved along X-Y axes set on the turning surface where the core turns to wind and stack the ribbon strips, it is necessary to move the core at a high speed along the X-Y axes when changing the angle at which the ribbon strips are stacked, hence there are problems that the device is subjected to speed restriction and so on.

The present invention has been made in view of the above-described problems and aims at providing a tire production device and a tire production method capable of reducing energy loss, risk of device failure, or feed deficiency and improving a speed of stacking the ribbon strips. Solving Means

As a configuration of a tire production device for solving the above-described problems, the tire production device is provided as described in claim 1.

According to this configuration, it is possible to fix the supply unit, and it is also possible to reduce the energy loss occurred in moving a heavy extruder configuring the supply unit and the risk of failure and troubles such as feed deficiency and the like. In other words, by constantly aligning the turning center axis of the drum with the sticking position where the ribbon strips are sticked to the drum, the drum can be turned at a high speed, hence the degree of freedom of the stacking pattern of the ribbon strips can be improved.

### Solution to Problem

It should be noted that the above-described summary of the invention does not enumerate all the necessary features of the present invention, and respective configurations constituting the feature groups can also be the invention.

### BRIEF DESCRIPTION OF THE DRAWINGS

Fig. 1 is a schematic diagram of a tire production device.
Fig. 2 is a perspective view illustrating a configuration of a tire molding unit.
Fig. 3 is a diagram illustrating operation of the tire production device.
Figs. 4A and 4B are diagrams illustrating operation of the tire production device.
Figs. 5A and 5B are schematic diagrams of another embodiment of the tire production device.

Hereinafter, the present invention will be described in detail through embodiments of the invention, however, the following embodiments do not limit the invention set forth in the claims, and not all of the combinations of the features described in the embodiments are essential to the solving means of the invention.

### DESCRIPTION OF EMBODIMENTS

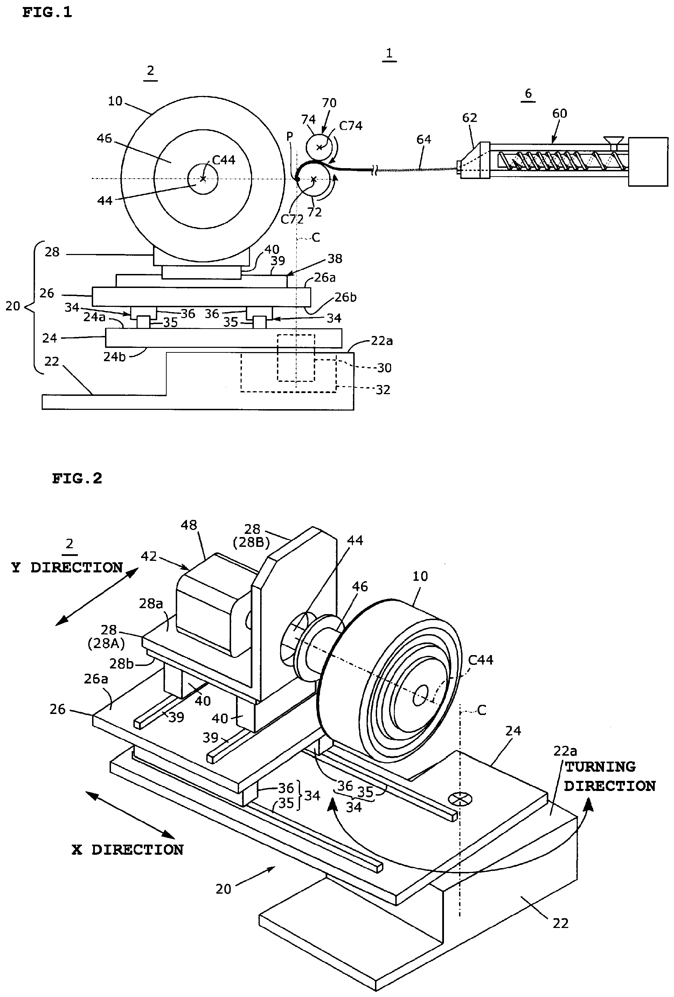

Fig. 1 is a schematic diagram of a tire production device 1 according to an embodiment. Fig. 2 is a perspective view illustrating the configuration of a tire molding unit 2.

As illustrated in Fig. 1, the tire production device 1 is a device for producing a product tire by the metal core production method. The device includes the tire molding unit 2 having a drum 10 that functions as an inner mold (core) when vulcanization-molding the tire, and a component supply unit 6 that supplies, onto an outer periphery of the drum 10, rubber-based tire constituting members such as an inner liner, sidewalls and a tread of the product tire.

First, an explanation is given as to the component supply unit 6. The component supply unit 6 is a unit for molding, into a strip shape, rubber materials that constitute each part of a product tire, such as tread rubber and sidewall rubber and supplying the strip-shaped rubber materials. That is, the component supply unit 6 supplies the strip-shaped rubber (hereinafter referred to as ribbon strip) having properties suitable for the above-mentioned each part.

The component supply unit 6 is provided with, for example, an extrusion molding machine (hereinafter simply referred to as "extruder") 60 and a sticking means 70. The extruder 60 heats and kneads unvulcanized rubber fed as materials and continuously supplies ribbon strips 64 formed into a predetermined cross-sectional shape by a mouthpiece 62 attached to the tip end of the extruder 60.

The ribbon strip 64 molded by the extruder 60 is conveyed to the sticking means 70 via a not-shown conveyance means which is configured by a plurality of rollers or the like.

The sticking means 70 is provided with, for example, a pair of rollers 72; 74, and a not-shown rotary drive means that drives the rollers 72; 74. The pair of rollers 72; 74, for example, have a cylindrical shape and are supported by a not-shown support means so as to be parallel to each other, with axis lines C72; C74 being aligned in the horizontal direction. The pair of rollers 72; 74 are rotary-driven by the rotary drive means to rotate synchronously in opposite directions to each other, as illustrated by the arrows in the figure. Rotation speeds of the rollers 72; 74 are set in accordance with an extrusion speed of the ribbon strip 64 to be extruded from the extruder 60.

The rollers 72; 74 are configured, for example, to have different outer diameter dimensions. As illustrated in Fig. 1, the roller 72 having a larger diameter is disposed on a lower side and the roller 74 having a smaller diameter is disposed on an upper side, and these are so set that an outer peripheral surface of the larger diameter roller 72 is located forward of an outer peripheral surface of the smaller diameter roller 74.in the conveyance direction of the ribbon strip 64. The rollers 72; 74 are disosed so that the outer peripheral surfaces thereof are separated from each other by a predetermined distance, to thereby sandwich the ribbon strip 64 extruded from the mouthpiece 62 between the rollers 72 and 74, and guides, by the rotation of the roller 72, the ribbon strip 64 to a sticking position P at which the ribbon strip 64 is sticked to the drum 10.

In this embodiment, as described later, since an axis line of the drum 10 (an axis line C44 of a drum shaft 44) and an axis line C72 of the roller 72 are set at the same height, a portion of the outer peripheral surface of the roller 72, which is located nearest to the tire molding unit 2 side, comes close to the outer peripheral surface of the drum 10, this position was set as the sticking position P at which the ribbon strip 64 is sticked to the drum 10 (see Fig. 1). Incidentally, the sticking position P may be set appropriately within a range of thickness from the outer peripheral surface of the roller 72, taking the thickness of the ribbon strip 64 into consideration.

Further, it was so configured that the ribbon strip 64 passes the center of the roller 72 in the width direction, and that the center position of the roller 72 in the width direction was determined to be the sticking position P.

The tire molding device 2 is disposed so as to face the supply direction of the ribbon strip 64 to be supplied from the component supply unit 6. The tire molding unit 2 is provided with the drum 10 to which the ribbon strip 64 is sticked and a mounting base 20 capable of changing a position of the drum 10 with respect to the component supply unit 6, and is configured to be able to change the position where the drum 10 faces the component supply unit 6.

The mounting base 20 is made to be movable on floors of tire production factories or the like, for example, and is provided with a base 22, a turning table 24, a moving table 26 and a drum table 28. The mounting base 20 is configured by stacking the base 22, the turning table 24, the moving table 26 and the drum table 28 sequentially in this order from the floor side.

The base 22 is a part to be the foundation of the mounting base 20, and is provided with, for example, wheels for moving on not-shown rails laid on the floor surface. The base 22 has a horizontal surface part 22a that is formed in a planar shape in a part on an upper surface side of the base 22 and this planar part becomes horizontal in a state where the base 20 is disposed on the rails.

The base 22 is also provided with a rotary support mechanism having a rotary shaft 30 that enables the turning table 24 to turn with respect to the base 22, and a rotary drive mechanism 32.

The rotary support mechanism may be configured by, for example, the rotary shaft 30 and not-shown multiple types of bearings or the like. The rotary shaft 30 is freely rotatably mounted, with the axis line C aligned in the vertical direction, to the base 22 via the bearing or the like in such a manner as to penetrate the horizontal surface part 22a of the base 22. The tire molding unit 2 is disposed with respect to the component supply unit 6 so that the axis line C of the rotary shaft 30 passes through the sticking position P where the ribbon strip 64 is sticked.

To the upper end part of the rotary shaft 30, which has penetrated the horizontal surface 22a of the base 22, the turning table 24 is fixed. To the lower end part of the rotary shaft 30, the rotary drive mechanism for rotating the rotary shaft 30 is connected. The rotary drive mechanism may be configured by, for example, a motor that serves as a drive source and a transmission mechanism that transmits the rotational force of the motor to the turning table. For the transmission mechanism, a chain or a belt, and a pair of sprockets or the like may be used, one of the sprockets may be attached to the rotary shaft and the other one of the sprockets to the motor, and the chain or the belt may be laid over to both of the sprockets.

The turning table 24 is formed, for example, in a planar shape parallel to the horizontal surface part 22a, so that in a state of being attached to the rotary shaft 30 extending from the base 22 side, a part on the lower surface 24b side facing the horizontal surface part 22a of the base 22 does not come in contact with the horizontal surface part 22a.

In this way, by forming the lower surface 24b of the turning table 24, which faces the horizontal surface part 22a of the base 22, in the planar shape, a thrust bearing may be interposed between the horizontal surface part 22a of the base 22 and the lower surface 24b of the turning table 24 so as to configure a part of the rotary support mechanism. The thrust bearing, by being disposed so that the center of rotation becomes coaxial with the axis line of the rotary shaft 30, can support the weight of the members upper than the turning table 24 by the horizontal surface part 22a of the base 22. With this configuration, the turning table 24 can stably be turned with respect to the base 22.

A linear motion mechanism 34 is provided on the upper surface 24a of the turning table 24. For the linear motion mechanism 34, for example, a mechanism configured by linear rails 35 and blocks 36 that are provided to be freely movable on the linear rails 35 may be used. The linear motion mechanism 34 is provided in a pair on the turning table 24 so as to extend parallel to each other, and the linear rails 35; 35 are fixed to the upper surface 24a of the turning table 24 in such a manner as to extend in the tangential direction of the turning direction of the turning table 24. The position of the block 36 on the linear rail 35 is controllable, for example, by using a drive mechanism configured by a ball screw mechanism and a motor.

The moving table 26 is, for example, made of a plate member having an upper surface 26a and a lower surface 26b formed to be plane surfaces mutually parallel to each other. The lower surface 26b is fixed to the blocks 36; 36 of the pair of the linear motion mechanisms 34 mounted on the turning table 24.

A linear motion mechanism 38 is provided on the upper surface 26a of the moving table 26. For the linear motion mechanism 38, for example, a mechanism configured by linear rails 39 and blocks 40 that are provided to be freely movable on the linear rails 39 may be used. The linear motion mechanism 38 is provided in a pair on the moving table 26 so as to extend parallel to each other. The linear rail 39 of each linear motion mechanism 38 is fixed to the upper surface 24a of the turning table 24 so as to extend in a direction orthogonal to the linear rails 35 provided on the turning table 24. The position of the block 40 on the linear rail 39 is controllable, for example, by using the drive mechanism configured by the ball screw mechanism and the motor.

The drum table 28 has, for example, a base board part 28A made of a rectangular plate member having an upper surface 28a and a lower surface 268 formed to be plane surfaces mutually parallel to each other and a raised wall part 28B. The base board part 28A is fixed to the blocks 40; 40 of the pair of the linear motion mechanisms 38 mounted on the moving table 26.

On the upper surface 28a of the drum table 28, a drum drive unit 42 that rotatably supports the drum 10 is provided. The drum drive unit 42 has, for example, a motor that serves as a drive source to rotate the drum 10, a drum shaft 44 to which the drum 10 is attached, a transmission mechanism for transmitting the rotation of the motor to the drum shaft 44, and an attachment 46 that enables the drum 1 0 to be attached to and detached from the drum shaft 44.

The motor and the transmission mechanism are housed as a mechanism part 48 in a single housing, for example, and disposed on the base board part 28A. The drum shaft 44 extends in the horizontal direction from the mechanism part 48 so as to be a cantilever support, one end thereof is connected to the transmission mechanism and the other end thereof penetrates the raised wall part 28B of the drum table 28. In this embodiment, the height of the axis line C44 of the rotation center axis of the drum shaft 44 was set so as to coincide with the height of the axis line C72 of the roller 72, for example.

The attachment 46 is attached on the outer periphery of the tip end side of the drum shaft 44 that has penetrated the raised wall part 28B of the drum table 28. The attachment 46 is provided with a detachable mechanism for enabling the drum 10 to be attached to and detached from the drum shaft 44.

The drum 10, for example, is formed so that its outer shape coincides with the inner peripheral shape of the product tire, and the inner periphery side is detachably attached to the attachment 46. "Detachable" here refers to a state of being attached in which the drum 10 is not rotatable with respect to the attachment 46 but co-rotates with the attachment 46 in the circumferential direction, and is movable in the axial direction.

According to the tire molding device 2 with the above-described configuration, the drum 10 can be rotated by rotating the turning table 24 with respect to the base 22.

Also, by moving the moving table 26 on the turning table 24 or by moving the drum table 28 on the moving table 26, the position of the drum 10 on the turning table 24 can be freely changed. In other words, the drum 10 can be moved along the orthogonal coordinate axes set, on the upper surface 24a of the turning table 24 formed in the planar shape. with the extension direction of the linear motion mechanism 34; 34 as being the X-axis, and the extension direction of the linear motion mechanism 38; 38 as being the Y-axis, and so on.

Then, by turning the turning table 24 around the axis line C, the angle of the ribbon strip 64 to be received at the sticking point P from the roller 72 to the outer periphery of the rum 10 can be changed.

Furthermore, by moving in the X axis and Y axis directions on the turning table 24, the position of the drum 10 where the ribbon strip 64 is sticked can be controlled and the pressure at which the ribbon strip 64 to be received from the roller 72 is sticked can also be controlled.

Although it has been explained that the moving table 26 can be moved in the tangential direction around the axis C line by the linear motion mechanism 34; 34, and the drum table 28 can be moved in the moving direction of the moving table 26 by the linear motion mechanism 38; 38., to thereby change the position of the drum 10 on the turning table 24. However, it is not limited to the above, and the direction in which the moving table 26 moves on the turning table 24 or the direction in which the drum table 28 moves on the moving table 26 may be set as desired. Namely, it may be configured that the drum 10 is made to be movable on the turning table 24 in directions orthogonal to each other.

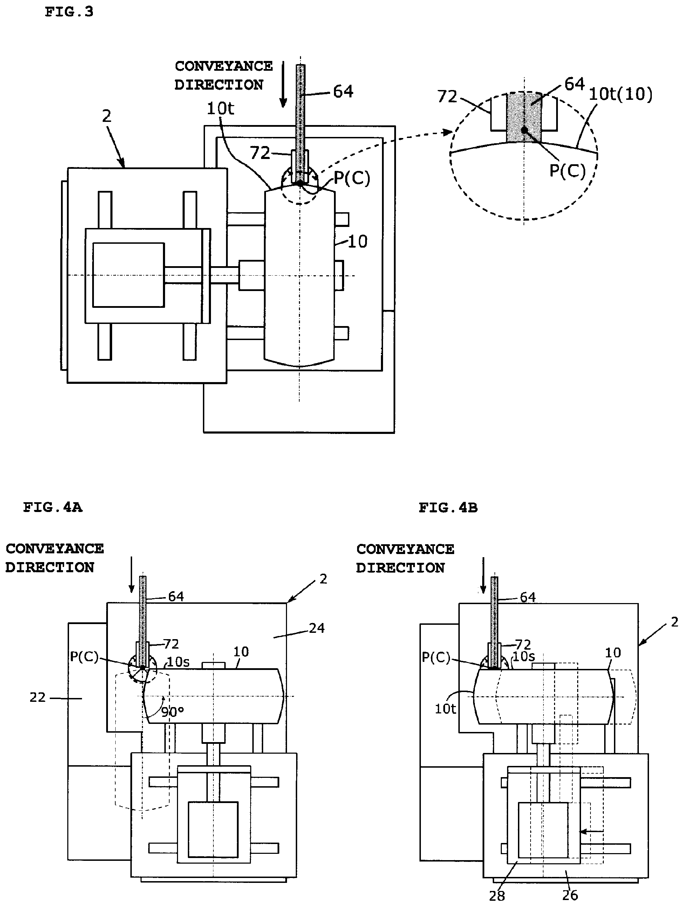

Fig. 3 and Figs. 4A and 4B are diagrams illustrating operations of the tire production device 1 according to the present embodiment. Fig. 3 is a diagram illustrating an example of sticking the ribbon strip 64 to the center of the drum 10 in the width direction. As illustrated in the enlarged view of the same figure, this is a layout diagram illustrating arrangement of the tire molding unit 2 relative to the component supply unit 6 when sticking the ribbon strip 64 at the center of the drum 10 in the width direction without tilting the ribbon strip 64. For example, this state is assumed to be a turning angle 0° of the tire molding unit 2.

Figs. 4A and 4B illustrate a state in which the tire molding unit 2 is rotated 90° from the state illustrated in Fig. 3 to cause the side surface 10s of the drum 1 0 to be opposed to the sticking position P. According to the configuration of the tire molding unit 2 in this embodiment, in a case where the sticking position of the ribbon strip 64 is significantly changed from a crown part 10t of the drum 10 to the side surface 10s of the drum 10, it may be sufficient to configure that, as illustrated in Fig, 4A, the turning table 24 is rotated 90° and that, as illustrated in Fig. 4B, only the drum table 28 is moved so that the side surface 10s of the drum 10 faces the sticking position P.

Then, while finely adjusting, by the drum 10, the distance to the sticking position P along the X-Y axes set on the turning table 24, the sticking angle of the ribbon strip 64t may be adjusted by slightly rotating the turning table 24. In other words, since the axis line C of the turning table 24 is aligned with the sticking position P, even if the position of the drum 10 is turned greatly, there is no need to move the drum 10 significantly and abruptly along the X axis or the Y axis, this contributes to increase in the speed and precision.

Therefore, according to the tire production device 1 with this configuration, since the moving amount of the drum 10 can be reduced as described above, it is possible to reduce energy loss, risk of device failure, and troubles such as feed deficiency that occur in the case where, like in the conventional technology, the component supply unit 6 side is moved with respect to the drum 10, and it is also possible to improve the stacking speed of the ribbon strips 64.

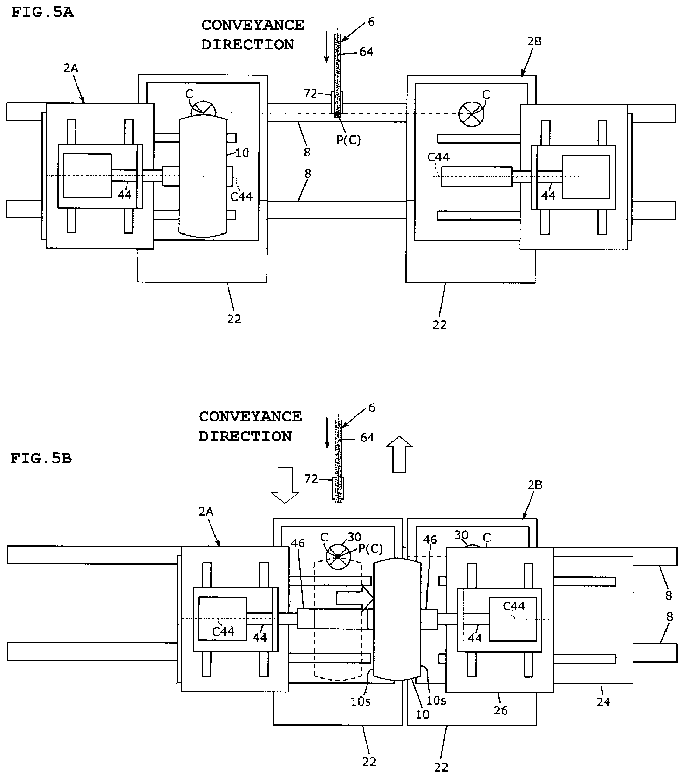

Figs. 5 A and 5B are diagrams illustrating another embodiment of the tire production device 1.

As illustrated in Fig. 5A, the tire production device 1, by being provided with two tire molding units 2A; 2B on the same rails 8; 8 for one component supply unit 6, the molding efficiency of a green tires can be improved. Each of the tire molding units 2A; 2B is so configured that the drum shafts 44 face each other. Furthermore, each of the tire molding units 2A: 2B is so configured that, when moved along the rails 8; 8, the axis line C of each of the turning tables 24 is in correspondence with the sticking position P set in the tire production device 1.

For example, in the tire molding unit 2A, since the drum 10 is attached on the drum shaft 44 in a cantilevered state, it is possible to stick the ribbon strip 64 up to a portion of one side face corresponding to the bead part of the tire, but it is impossible to stick the ribbon strip 64 up to that portion of the other side face 10s. Therefore, as illustrated in Fig. 5B, after completion of sticking to the one side face in the tire molding unit 2A, the drum 10 may be moved from the tire molding unit 2A to the tire molding unit 2B to stick the ribbon strip 64 to the other side face 10s.

Incidentally, as shown by the arrows in Fig. 5B, the component supply unit 6 may be configured to be movable in the forward and backward directions with respect to the tire molding units 2A; 2B.

Therefore, when producing a tire by the metal core production method, by disposing, along the rails 8; 8, a component supply unit 6 that supplies an inner liner material which forms the inner peripheral surface of a product tire, a component supply unit 6 that supplies a sidewall material, and a component supply unit 6 that supplies a tread material, and by providing two of the tire molding units 2A; 2B for each of the component supply unit 6, it is possible to produce the tire efficiently.

As described above, it may be preferable to configure that, in the metal core production method used in a tire production device, the device is provided with a supply unit that supplies, as a member constituting a tire, a ribbon strip molded into a ribbon shape, and a tire molding unit configured to stick the ribbon strip onto an outer periphery of a drum having, as an outer shape thereof, an inner peripheral shape of a product tire, while rotating the drum, in which the supply unit has a sticking position at which the ribbon strip is sticked onto the outer periphery of the drum, in which the tire molding unit includes the drum with a rotation axis thereof being made horizontal, a turning table that makes the drum to turn around an axis line vertically penetrating the sticking position while maintaining a horizontal state of the rotation axis of the drum, and a parallel movement mechanism that is provided on the turning table and configured to move the drum in parallel along a horizontal surface set to the turning table, and in which the rotation axis extends in a tangential direction of a circle centered on the axis line about which the turning table turns.

According to this configuration, it is possible to fix the supply unit, and it is also possible to reduce the energy loss occurred in moving a heavy extruder configuring the supply unit, risk of failure and troubles such as feed deficiency and so on. In other words, by constantly aligning the turning center axis of the drum with the sticking position where the ribbon strips are sticked to the drum, the drum can be turned at a high speed, hence the degree of freedom of the stacking pattern of the ribbon strips can be improved. Furthermore, according to this configuration, even if the turning table is greatly turned in order to move the drum to the sticking position, it is not necessary to abruptly move (parallel movement) the drum along the XY axes set in the turning table, for example, thus it is possible to contribute to high-speed and high-precision performance.

Furthermore, it is preferable to configure that, in the tire production device, the parallel movement mechanism makes the drum to move in parallel in a tangential direction of a circle centered on the axis line and in an orthogonal direction orthogonal to the tangential direction.

That is, in the tire production method using the metal core production method, when sticking the ribbon strip molded into the ribbon shape as a member constituting the tire onto an outer periphery of the drum having, as an outer shape thereof, an inner peripheral shape of a product tire, while rotating the drum, the drum with the rotation axis thereof being made parallel may be provided on the turning table, which turns around the axis line vertically penetrating the sticking position set in the supply unit, at which the ribbon strip is sticked to the drum. The drum may preferably be movable on the turning table in parallel along the horizontal surface set on the turning table, and more preferably, may be movable in parallel to the tangential direction of the circle centered on the axis line and in the orthogonal direction orthogonal to the tangential direction.

In the above-described embodiments, the component supply unit is configured to supply the ribbon strips by kneading the rubber material by the extruder, however, it is not limited to this, namely the component supply unit may be configured to supply, for example, a belt material or the like including aggregates such as fibers.

### REFERENCE SIGN LIST

1: Tire production device, 2: Tire molding unit, 6: Component supply unit, 10: Drum, 20: Mounting base, 22: Base, 24: Turning table, turning table, 26 :Moving table, 28: Drum table, 60: Extrusion molding machine (extruder), 64: Ribbon strip, C: Axis line.

## Claims

1. A tire production device (1) comprising:
a supply unit (6) configured to supply, as a member constituting a tire, a ribbon strip (64) molded into a ribbon shape; and
a tire molding unit configured to stick the ribbon strip (64) onto an outer periphery of a drum (10) having, as an outer shape thereof, an inner peripheral shape of a product tire, while rotating the drum (10),
wherein, the supply unit (6) has a sticking position at which the ribbon strip (64) is sticked onto the outer periphery of the drum (10), wherein an axis line of a rotary shaft passes through the sticking position;
wherein, the tire molding unit includes:
the drum (10) with a rotation axis thereof being made horizontal,
a turning table (24) that makes the drum (10) to turn around an axis line vertically penetrating the sticking position while maintaining a horizontal state of the rotation axis of the drum (10), and
a parallel movement mechanism that is provided on the turning table (24) and configured to move the drum (10) in parallel along a horizontal surface set to the turning table (24),
a moving table (26) fixed to a first linear motion mechanism (34) mounted on the turning table (24),
a drum table (28) fixed to a second linear motion mechanism (38) mounted on the moving table (26); wherein
the tire production device is configured such that by moving the moving table (26) on the turning table (24) or by moving the drum table (28) on the moving table (26), the drum (10) can be moved along an orthogonal coordinate axes set with an extension direction of the first linear motion mechanism (34) being the X-axis, and an extension direction of the second linear motion mechanism (38) being the Y-axis; and
wherein, the rotation axis extends in a tangential direction of a circle centered on the axis line about which the turning table (24) turns.

2. The tire production device (1) according to claim 1, wherein the parallel movement mechanism makes the drum (10) to move in parallel in a tangential direction of a circle centered on the axis line and in an orthogonal direction orthogonal to the tangential direction.

3. A tire production method in which a ribbon strip (64) molded into a ribbon shape as a member constituting a tire is sticked onto an outer periphery of a drum (10) having, as an outer shape thereof, an inner peripheral shape of a product tire, while rotating the drum (10),
wherein, the drum (10) with a rotation axis thereof being made horizontal is provided on a turning table (24), which turns around an axis line vertically penetrating a sticking position set in a supply unit (6), where the ribbon strip (64) is sticked to the drum (10), wherein an axis line of a rotary shaft passes through the sticking position; and
the drum (10) is made movable in parallel along a horizontal surface set on the turning table (24); wherein a moving table (26) is fixed to a first linear motion mechanism (34) mounted on the turning table (24),
a drum table (28) is fixed to a second linear motion mechanism (38) mounted on the moving table (26); wherein
the tire production device is configured such that by moving the moving table (26) on the turning table (24) or by moving the drum table (28) on the moving table (26), the drum (10) can be moved along an orthogonal coordinate axes set with an extension direction of the first linear motion mechanism (34) being the X-axis, and an extension direction of the second linear motion mechanism (38) being the Y-axis.

4. The tire production method according to claim 3, wherein the drum (10) is made movable in parallel in a tangential direction of a circle centered on the axis line and in an orthogonal direction orthogonal to the tangential direction.

## Patentansprüche

1. Reifenproduktionsvorrichtung (1), Folgendes umfassend:
eine Zuführeinheit (6), die konfiguriert ist, um, als ein einen Reifen bildendes Element, einen in einer Bandgestalt geformten Bandstreifen (64) zuzuführen; und
eine Reifenformeinheit, die konfiguriert ist, den Bandstreifen (64) an einem Außenumfang einer Trommel (10), die, als eine äußere Gestalt davon, eine Innenumfangsgestalt eines Produktreifens aufweist, aufzukleben, während die Trommel (10) gedreht wird,
wobei die Zuführeinheit (6) eine Aufklebposition aufweist, an der der Bandstreifen (64) an dem Außenumfang der Trommel (10) aufgeklebt wird, wobei eine Achsenlinie einer rotierenden Welle durch die Aufklebposition hindurchgeht;
wobei die Reifenformeinheit Folgendes einschließt:
die Trommel (10) mit einer Drehachse davon, die in die Horizontale gebracht ist,
einen Drehtisch (24), der die Trommel (10) veranlasst, sich um eine Achsenlinie zu drehen, die die Aufklebposition vertikal durchdringt, während ein horizontaler Zustand der Drehachse der Trommel (10) aufrechterhalten wird, und
einen Parallelbewegungsmechanismus, der auf dem Drehtisch (24) bereitgestellt ist und konfiguriert ist, um die Trommel (10) parallel entlang einer horizontalen Fläche, die an dem Drehtisch (24) platziert ist, zu bewegen,
einen beweglichen Tisch (26), der an einem auf dem Drehtisch (24) montierten ersten linearen Bewegungsmechanismus (34) befestigt ist,
einen Trommeltisch (28), der an einem auf dem beweglichen Tisch (26) montierten zweiten linearen Bewegungsmechanismus (38) befestigt ist; wobei
die Reifenproduktionsvorrichtung so konfiguriert ist, dass durch Bewegen des beweglichen Tischs (26) auf dem Drehtisch (24) oder durch Bewegen des Trommeltischs (28) auf dem beweglichen Tisch (26), die Trommel (10) entlang eines orthogonalen Koordinatenachsen-Satzes bewegt werden kann, wobei eine Erstreckungsrichtung des ersten linearen Bewegungsmechanismus (34) die X-Achse ist, und wobei eine Erstreckungsrichtung des zweiten linearen Bewegungsmechanismus (38) die Y-Achse ist; und
wobei sich die Drehachse in einer Tangentialrichtung eines auf der Achsenlinie, um die sich der Drehtisch (24) dreht, zentrierten Kreises erstreckt.

2. Reifenproduktionsvorrichtung (1) nach Anspruch 1, wobei der Parallelbewegungsmechanismus die Trommel (10) veranlasst, sich parallel in einer Tangentialrichtung eines auf der Achsenlinie zentrierten Kreises und in einer orthogonalen Richtung orthogonal zu der Tangentialrichtung zu bewegen.

3. Reifenproduktionsverfahren, in dem ein in einer Bandgestalt geformter Bandstreifen (64) als ein einen Reifen bildendes Element auf einem Außenumfang einer Trommel (10), die, als eine äußere Gestalt davon, eine Innenumfangsgestalt eines Produktreifens aufweist, aufgeklebt wird, während die Trommel (10) gedreht wird,
wobei die Trommel (10) mit einer Drehachse davon, die in die Horizontale gebracht ist, auf einem Drehtisch (24) bereitgestellt ist, der sich um eine Achsenlinie dreht, die eine in einer Zuführeinheit (6) platzierte Aufklebposition, wo der Bandstreifen (64) auf die Trommel (10) aufgeklebt wird, vertikal durchdringt, wobei eine Achsenlinie einer rotierenden Welle durch die Aufklebposition hindurchgeht; und
die Trommel (10) entlang einer horizontalen Fläche, die auf dem Drehtisch (24) platziert ist, parallel bewegbar gemacht ist; wobei ein beweglicher Tisch (26) an einem auf dem Drehtisch (24) montierten ersten linearen Bewegungsmechanismus (34) befestigt ist,
ein Trommeltisch (28) an einem auf dem beweglichen Tisch (26) montierten zweiten linearen Bewegungsmechanismus (38) befestigt ist; wobei
die Reifenproduktionsvorrichtung so konfiguriert ist, dass durch Bewegen des beweglichen Tischs (26) auf dem Drehtisch (24) oder durch Bewegen des Trommeltischs (28) auf dem beweglichen Tisch (26) die Trommel (10) entlang eines orthogonalen Koordinatenachsen-Satzes bewegt werden kann, wobei eine Erstreckungsrichtung des ersten linearen Bewegungsmechanismus (34) die X-Achse ist, und wobei eine Erstreckungsrichtung des zweiten linearen Bewegungsmechanismus (38) die Y-Achse ist.

4. Reifenproduktionsverfahren nach Anspruch 3, wobei die Trommel (10) parallel in einer Tangentialrichtung eines auf der Achsenlinie zentrierten Kreises und in einer orthogonalen Richtung orthogonal zu der Tangentialrichtung bewegbar gemacht ist.

## Revendications

1. Dispositif de production de pneumatique (1) comprenant :
une unité d'apport (6) configurée pour l'apport, en tant qu'élément constitutif d'un pneumatique, d'une bande-ruban (64) moulée en forme de ruban, et
une unité de moulage de pneumatique configurée pour faire coller la bande-ruban (64) sur une périphérie extérieure d'un tambour (10) ayant, comme forme extérieure de celui-ci, une forme périphérique intérieure d'un pneumatique de produit, pendant que le tambour (10) est mis en rotation ;
dans lequel l'unité d'apport (6) a une position de collage à laquelle la bande-ruban (64) est amenée à coller sur la périphérie extérieure du tambour (10), une ligne axiale d'un arbre rotatif traversant la position de collage ;
dans lequel l'unité de moulage de pneumatique inclut :
le tambour (10) dont un axe de rotation est rendu horizontal,
une platine tournante (24) qui fait tourner le tambour (10) autour d'une ligne axiale pénétrant verticalement la position de collage pendant qu'un état horizontal de l'axe de rotation du tambour (10) est maintenu, et
un mécanisme de déplacement parallèle qui est fourni sur la platine tournante (24) et configuré pour déplacer le tambour (10) en parallèle le long d'une surface horizontale placée sur la platine tournante (24),
une platine mobile (26) fixée à un premier mécanisme de déplacement linéaire (34) monté sur la platine tournante (24),
une platine à tambour (28) fixée à un deuxième mécanisme de déplacement linéaire (38) monté sur la platine mobile (26) ; dans lequel
le dispositif de production de pneumatique est configuré de telle sorte que, par le déplacement de la platine mobile (26) sur la platine tournante (24) ou par le déplacement de la platine à tambour (28) sur la platine mobile (26), le tambour (10) peut être déplacé le long d'un ensemble d'axes de coordonnées orthogonales, une direction d'étendue du premier mécanisme de déplacement linéaire (34) constituant l'axe X, et une direction d'étendue du deuxième mécanisme de déplacement linéaire (38) constituant l'axe Y ; et
dans lequel l'axe de rotation s'étend dans une direction tangentielle d'un cercle centré sur la ligne axiale autour de laquelle tourne la platine tournante (24).

2. Dispositif de production de pneumatique (1) selon la revendication 1, dans lequel le mécanisme de déplacement parallèle fait se déplacer le tambour (10) en parallèle dans une direction tangentielle d'un cercle centré sur la ligne axiale et dans une direction orthogonale en orthogonal à la direction tangentielle.

3. Procédé de production de pneumatique, dans lequel une bande-ruban (64) moulée en forme de ruban, en tant qu'élément constitutif d'un pneumatique, est amenée à coller sur une périphérie extérieure d'un tambour (10) ayant, comme forme extérieure de celui-ci, une forme périphérique intérieure d'un pneumatique de produit, pendant que le tambour (10) est mis en rotation ;
dans lequel le tambour (10), dont un axe de rotation est rendu horizontal, est fourni sur une platine tournante (24) qui tourne autour d'une ligne axiale pénétrant verticalement une position de collage, placée dans une unité d'apport (6), où la bande-ruban (64) est amenée à coller sur le tambour (10), une ligne axiale d'un arbre rotatif traversant la position de collage ; et
le tambour (10) est rendu déplaçable en parallèle le long d'une surface horizontale placée sur la platine tournante (24) ; dans lequel une platine mobile (26) est fixée à un premier mécanisme de déplacement linéaire (34) monté sur la platine tournante (24),
une platine à tambour (28) est fixée à un deuxième mécanisme de déplacement linéaire (38) monté sur la platine mobile (26) ; dans lequel
le dispositif de production de pneumatique est configuré de telle sorte que, par le déplacement de la platine mobile (26) sur la platine tournante (24) ou par le déplacement de la platine à tambour (28) sur la platine mobile (26), le tambour (10) peut être déplacé le long d'un ensemble d'axes de coordonnées orthogonales, une direction d'étendue du premier mécanisme de déplacement linéaire (34) constituant l'axe X, et une direction d'étendue du deuxième mécanisme de déplacement linéaire (38) constituant l'axe Y.

4. Procédé de production de pneumatique selon la revendication 3, dans lequel le tambour (10) est rendu déplaçable en parallèle dans une direction tangentielle d'un cercle centré sur la ligne axiale et dans une direction orthogonale en orthogonal à la direction tangentielle.
